# EUROPEAN PATENT APPLICATION

(11) **EP 1 898 622 A1**
(43) Date of publication of application: **12.03.2008**
(21) Application number: 07021536.3
(22) Date of filing: 14.06.2002
(51) Int. Cl.: H04N 1/00

(54) **Network facsimile apparatus**

(30) Priority: 18.06.2001 JP 2001182961
(62) Divisional of application: 02254180.9
(71) Applicant: Ricoh Company, Ltd., Tokyo 143-8555 (JP)
(72) Inventor: Tomohito, Kajiwara, Higashimurayama-shi Tokyo (JP)
(74) Representative: Leeming, John Gerard

(57) **Abstract**

A network facsimile apparatus (FX) having a real-time network facsimile function (12) and an e-mail-based facsimile function (11) is provided. The network facsimile apparatus (FX) includes a selector (1) for making a selection, for a transmission operation, whether to use the real-time network facsimile function (12) or the e-mail-based facsimile function (11). The selection is made in accordance wtih specified destination information.

## Description

The present invention generally relates to a network facsimile apparatus and particularly relates to a network facsimile apparatus having both a real-time network facsimile function and an e-mail-based network facsimile function and also relates to a network facsimile apparatus having a real-time network facsimile function.

Recently, a network facsimile apparatus has been brought into practical use that can be connected to networks such as the Internet and that is capable of communicating image information via the network.

There are two communication systems widely used for communications between network facsimile apparatuses. T.37 communication systems conform to ITU-T recommendation T.37 in which an e-mail-based network facsimile function for communicating image information using e-mail messages is specified. T.38 communication systems conform to ITU-T recommendation T.38 in which a real-time network facsimile function is specified that establishes a session directly to the destination terminal via the Internet so as to communicate image information in a real-time manner.

Accordingly, currently available network facsimile apparatuses are provided with both of the above-mentioned types of network facsimile functions.

Such a network facsimile apparatus requires a user to select which of the network facsimile functions is to be used for the specified destination and then input settings for the selected network facsimile function. Therefore, such a network facsimile apparatus is inconvenient for the user when he/she wishes to transmit image information.

There may be a further problem in a case where the real-time network function is used. When the line-delay time of the packet communication network is great, which may be the case for the Internet, timers counting various time-out values specified in Recommendation T.38 may indicate time-outs even for a case where normal communications are established.

Accordingly, it is a general object of the invention to provide a network facsimile that can solve the problems described above.

It is another and more specific object of the present invention to provide a network facsimile that can reduce any inconvenience for transmission operations and can improve reliability of communications made by the real-time network function.

In order to achieve the above objects, a network facsimile apparatus having a real-time network facsimile function and an e-mail-based network facsimile function is provided, which apparatus includes a selector for making a selection, for a transmission operation, whether to use the real-time network facsimile function or the e-mail-based network facsimile function, the selection being made in accordance with specified destination information.

Thus, according to the present invention, either the T.37 communication function or the T.38 communication function is selected automatically or manually selected by the user in accordance with the destination information specified by the user. For example, when the user wishes to send image information using an e-mail message and specifies an e-mail address as the destination information, the T.37 communication function is always selected. Therefore, in this regard, the network facsimile apparatus of the present invention can be operated with less effort being required from the user.

It is yet another object of the present invention to provided a network facsimile apparatus with improved communication ability for communications using the real-time network function.

According to the present invention, a network facsimile apparatus having a real-time network facsimile function is provided, which apparatus includes a line delay controller configured to determine, for a transmission operation, a line delay time between the apparatus and the specified destination terminal and to add the determined value to timer values used in the real-time network facsimile function, wherein the resulting timer values are used in the transmission operation.

In a further embodiment of the present invention, a network facsimile apparatus having a real-time network facsimile function is provided, which apparatus includes a line delay controller configured to determine, during a communication.stand-by state, a line delay time between the apparatus and each of the registered destination terminals for each time period and to store the obtained line delay times, the stored line delay times being, upon transmission, added to timer values used in the real-time network facsimile function in a case where a counterpart terminal is one of the registered destination terminals, wherein the resulting timer values are used in the transmission operation.

In a further embodiment of the present invention, a network facsimile apparatus having a real-time network facsimile function is provided, which apparatus includes a line delay controller configured to determine, for transmission, a line delay time between a destination terminal and each of a plurality of gateway devices via which communications can be made with the destination terminal and to select the gateway device having the smallest line delay time as the gateway device to be used for the transmission.

According to the above-mentioned network facsimile apparatus having a real-time network facsimile function, improved communication ability can be achieved.

The present invention also relates to a method of operating the network facsimile apparatuses described above.

Exemplary embodiments of the present invention are described below with reference to the accompanying schematic drawings, in which:-
Fig. 1 is a schematic diagram showing an example of an e-mail message used in the T.37 communication procedure.
Figs. 2A and 2B are block diagrams showing an example of a first communication configuration and a second communication configuration, respectively, that may be used for the T.38 communication procedure.
Fig. 3 is a block diagram showing an example of a third communication configuration that may be used for the T.38 communication procedure.
Fig. 4 is a block diagram showing an example of a structure of a network facsimile apparatus according to the present invention.
Fig. 5 is a flowchart showing an example of a process performed for a transmission operation made by a network facsimile FX according to the present invention.
Fig. 6 is a flowchart showing an example of a T.38 communication process (step 108 in Fig. 5).
Figs. 7A and 7B are tables showing examples of destination line delay information.
Fig. 8 is a flowchart showing another example of a process performed by the network facsimile apparatus according to the present invention.
Fig. 9 is a flowchart of an example of a transmission process (step 305 of Fig. 8).
Fig. 10 is a schematic diagram showing an example of a communication configuration in a case where a plurality of gateway devices is provided according to the present invention.
Fig. 11 is a table of an example of gateway apparatus registration information.
Fig. 12 is a flowchart showing another example of the T.38 communication process performed by the network facsimile apparatus FX according to the present invention.

In the following, principles and embodiments of the present invention will be described with reference to the accompanying drawings.

First, communication systems used for a network facsimile of the present invention will be described. There are two major communication systems used in network facsimile apparatuses. One is a communication system (T.37 communication procedure) conforming to ITU-T recommendation T.37 (an e-mail-based network facsimile function) that communicates image information using e-mail messages. The other is a communication system (T.38 communication procedure) conforming to ITU-T recommendation T.38 (a real-time network facsimile function) that establishes a session directly to the destination terminal via the Internet so as to communicate image information in a real-time manner.

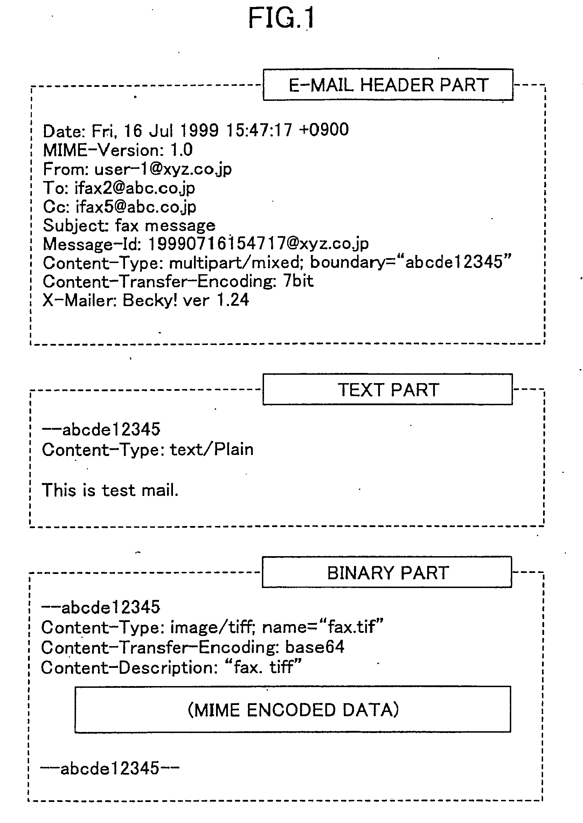

According to the T.37 communication procedure, image information is transmitted using e-mail messages as shown in Fig. 1.

The e-mail message shown in Fig. 1 is an e-mail message of a well-known multiple-part MIME format having a plurality of message body parts. The e-mail message includes an e-mail header part including information related to the sending date of the e-mail message ("Date" field), destination e-mail address ("To" field) and sender e-mail address ("From" field), a text part for transporting text data, and a binary part for transporting facsimile image information. In the binary part, MIME encoded data are contained that are obtained by transforming the facsimile image information according to a well-known MIME transformation.

The facsimile image information to be transported by the e-mail message is information obtained by compressing the original image data by an MH-coding technique and then transforming it into a TIFF-F format. Therefore, the MIME encoded data may be the MIME-transformed TIFF-F data.

It is to be noted that with the TIFF-F format, image data of a plurality of pages can be combined into a single file. Accordingly, data of a single transmission image information file containing data of a plurality of pages can be contained in a single binary part.

For the T.38 communication procedure, for example, three communication configurations are specified as described below.

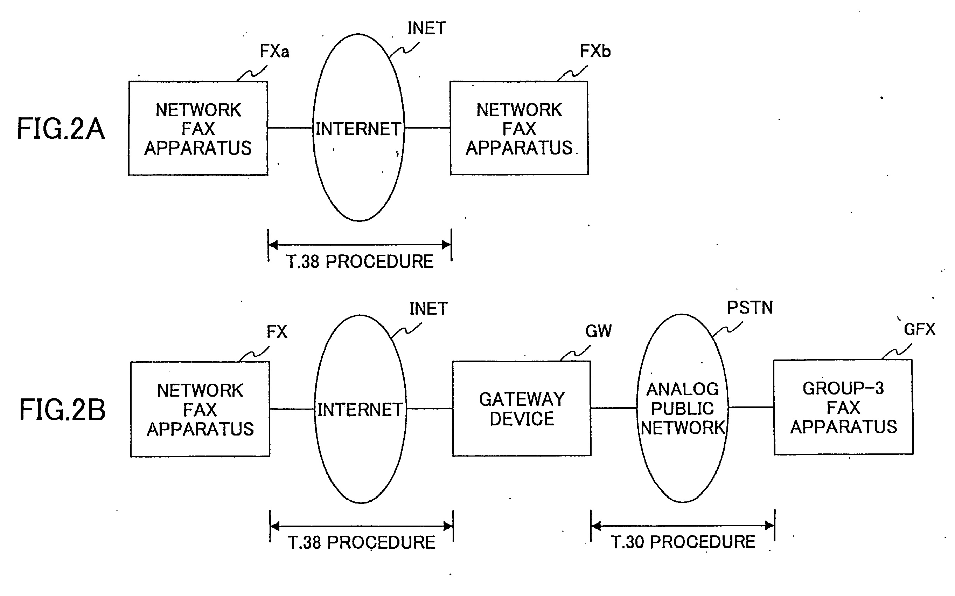

Fig. 2A shows a first communication configuration in which network facsimile apparatuses FXa and FXb provided with T.38 communication functions directly communicate with each other via the Internet INET. In this case, the T.38 communication procedure is adopted for communications between the network facsimile apparatus FXa and the network facsimile apparatus FXb.

Fig. 2B shows a second communication configuration in which a network facsimile apparatus FX provided with the T.38 communication function and connected to the Internet INET communicates via the gateway device GW with a Group-3 facsimile apparatus GFX that is connected to an analog public network PSTN. In this case, the T.38 communication procedure is adopted for communications between the network facsimile apparatus FX and the Group-3 facsimile apparatus GFX and a T.30 communication procedure conforming to the ITU-T recommendation T.30 is adopted for communications between the gateway device GW and the Group-3 facsimile apparatus GFX.

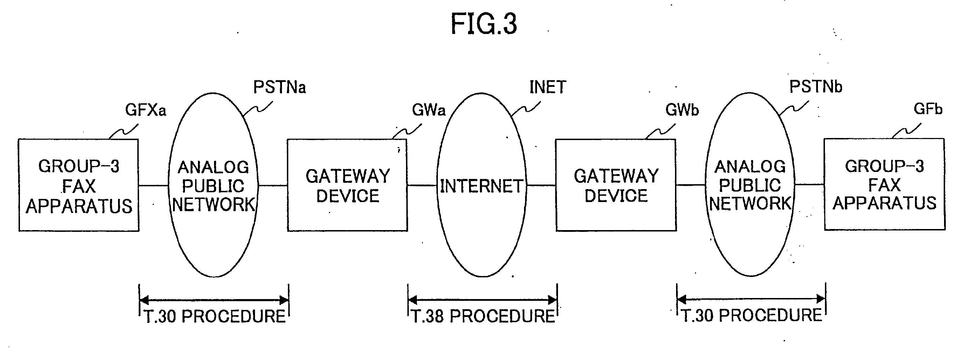

As shown in Fig. 3, a third communication configuration is a configuration in which a Group-3 facsimile apparatus GFXa connected to an analog public network PSTNa via the internet INET communicates with the a Group-3 facsimile apparatus GFXb connected to an analog public network PSTNb. In this case, a gateway device GWa is provided between the analog public network. PSTNa and the Internet INET and a gateway device GWb is provided between the analog public network PSTNb and the Internet INET. The T.30 communication procedure is adopted for communications between the Group-3 facsimile apparatus GFXa and the gateway device GWa and between the Group-3 facsimile apparatus GFXb and the gateway device GWb, and the T.38 communication procedure is adopted for communications between the gateway device GWa and the gateway device GWb.

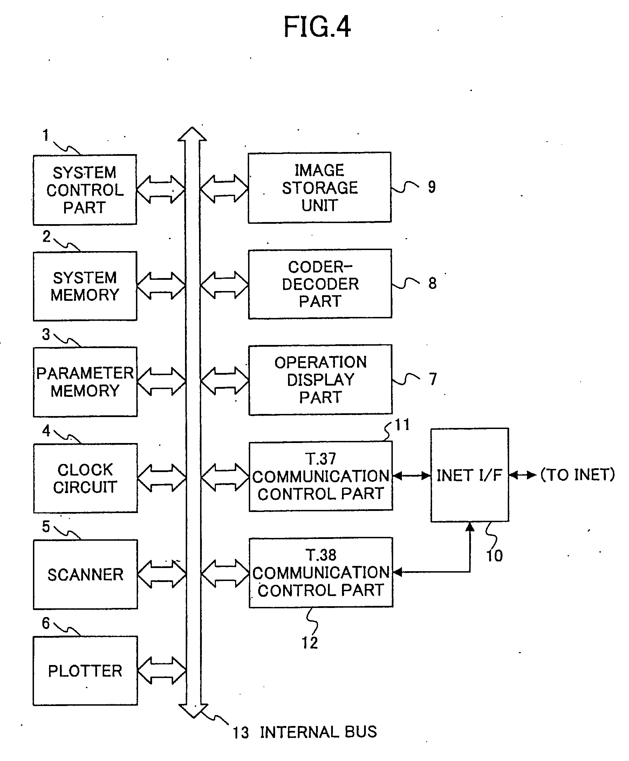

Fig. 4 is a diagram showing an example of a configuration of the network facsimile FX (FXa, FXb) according to the present invention. The network facsimile FX is provided with both the T.37 communication function and the T.38 communication function.

A system control part 1 performs control processes for respective parts of the network facsimile apparatus FX as well as various control processes such as a facsimile transmission control procedure process. A system memory 2 stores control process programs executed by the system control part 1 and various data required for performing the process programs and also serves as a work area of the system control part 1. A parameter memory 3 stores various information specific to the network facsimile apparatus FX. A clock circuit 4 outputs current time information.

A scanner 5 reads'original images at a predetermined resolution. A plotter 6 outputs images at a predetermined resolution. An operation display part 7 is provided for operating the network facsimile apparatus FX and is provided with various operational keys and various indicators.

A coder-decoder part 8 encodes and compresses image signals and also decodes the encoded compressed image information back to the original image signals. An image storage unit 9 stores a number of image information items that are in a coded and compressed state.

An internet interface circuit 10 is provided for connecting the network facsimile apparatus FX to'the Internet INET. A T.37 communication control part 11 is provided for realizing a communication function conforming to the T.37 communication procedure. A T.38 communication control part 12 is provided for realizing a communication function conforming to the T.38 communication procedure.

The system control part 1, the system memory 2, the parameter memory 3, the clock circuit 4, the scanner 5, the plotter 6, the operation display part 7, the coder-decoder part 8, the image storage unit 9, the T.37 communication control part 11 and the T.38 communication control part 12 are connected to an internal bus 13. Thus, data are communicated between these elements mainly via the internal bus 13. The INET interface 10 connects the T.37 communication control part 11 and the T.38 communication control part 12 to the Internet.

As has been described above, the network facsimile apparatus FX is provided with both the T.37 communication function and the T.38 communication function. Therefore, upon transmission, a suitable selection should be made between the T.37 communication function and the T.38 communication function in accordance with the destination information that is input by the user.

Accordingly, in the present embodiment, selection between the T.37 communication function and the T.38 communication function in accordance with the destination information is made in the following manner.

The destination information corresponding to the destination selected by the user is, for example, an e-mail address of an addressee user or a destination terminal, a host name of the destination terminal, an IP address of the destination terminal and an alias.

Herein, the alias refers to a name designated by an alias name function at a gate keeper.

Based on the knowledge that an e-mail address normally has a format of "user name@host name", if "@" is contained in the destination information, it is determined to adopt the T.37 communication function.

Otherwise, normally, the destination terminal can be determined as a terminal adopting the T.38 communication procedure. However, there may be cases where the host name, IP address and the alias cannot be clearly distinguished from one another.

Accordingly, if "@" is not contained in the destination information, a destination inquiry guidance message is displayed that queries the user whether to adopt the T.37 communication function or to adopt the T.38 communication function.

That is to say, due to an increased degree of freedom in the form of the destination information, the mere fact that the destination information does not contain "@" does not comfirm that the destination information is for the network facsimile apparatus having the T.38 communication function. Therefore, the final determination of the communication function should be made by querying the user who knows the type of destination.

It is to be noted that the destination information is understood to mean both the registered information of telephone numbers, e-mail addresses and aliases that are registered for one-touch dialing and abbreviated dialing numbers and the direct input information of telephone numbers, e-mail addresses and aliases directly input by the user by operating the operation display part 7.

Thus, in the present embodiment, the T.37 communication function or the T.38 communication function is selected automatically or by intervention of the user in accordance with the destination information specified by the user. Therefore, the user can select the communication function with reduced effort. For example, when the user wishes to send image information using an e-mail message and has specified an e-mail address as the destination information, the T.37 communication function will always be selected. In this respect, efforts required by the user can be reduced.

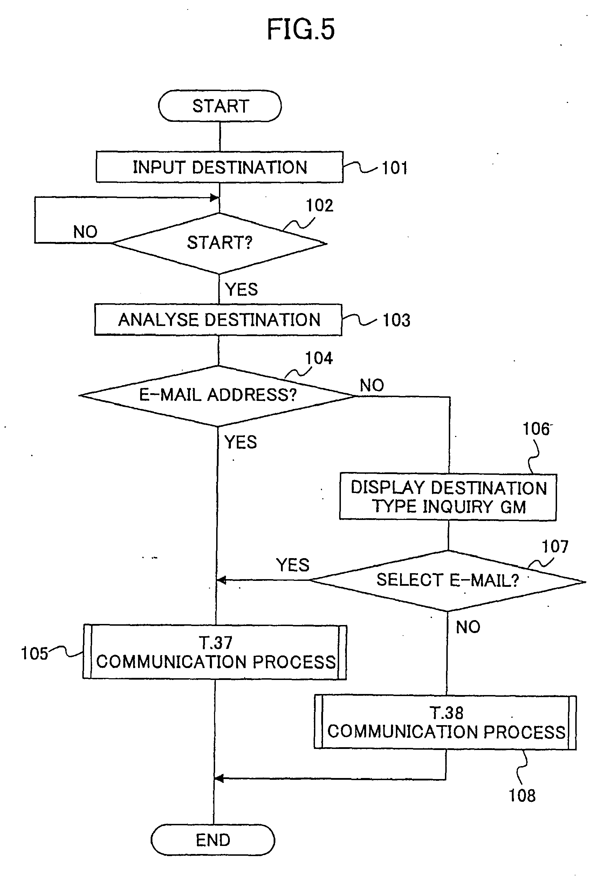

Fig. 5 is a flowchart showing an example of a process performed by the network facsimile apparatus FX upon transmission according to the present invention.

The user sets an original sheet to be transmitted into the scanner 5. Then, in step 101, destination information is input by the user via the operation display part 7. The process waits until the user operates the operation display part 7 and an initiation of transmission is directed (NO loop from step 102).

When the user directs an initiation of transmission and the result of step 102 is YES, the content of the input destination information is analysed (step 103). Then, it is determined whether the destination address is an e-mail address containing "@" (step 104).

If the result of step 104 is YES, the T.37 communication function is selected and a predetermined T.37 communication process is performed in step 105.

If the result of step 104 is NO, the process proceeds to step 106 where a destination type inquiry guidance message is displayed to the user for inquiring whether the destination type requires the adoption the T.37 communication function (e-mail) or the T.38 communication function (other than e-mail). Accordingly, the user is requested to determine whether to adopt the T.37 communication function or the T.38 communication function.

If the user selects e-mail and the result of step 107 is YES, the process proceeds to step 105 where the predetermined T.37 communication process is performed.

If the user selects the destination information other than e-mail and the result of step 107 is NO, the T.38 communication function is selected and the predetermined T.38 communication process is performed in step 108.

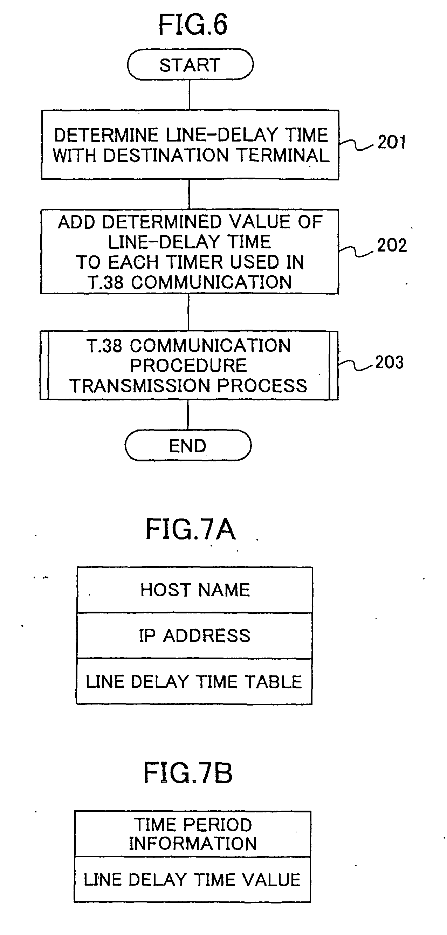

Fig. 6 is a flowchart'showing an example of the T.38 communication process (step 108 in Fig. 5).

First, a Ping command (or a Ping utility) of the ICMP (Internet Control Message Protocol) is used for determining a line delay time for communications to and from a specified destination terminal and the determined line delay time is stored (process in step 201).

Then, the determined line delay time stored during the process in step 201 is added to timer values of timers for determining various time-out values applied in the T.38 communication to update the timer values (process in step 202). Timers that may be used in the T.38 communication are the same as those used for the T.30 recommendation (Group-3 facsimile). That is to say, the timers may be a 30-second timer T1, a 6-second timer T2 and a 3-second timer T4.

Then, a transmission process of the T.38 communication procedure (process in step 203) is performed using the timer values that are updated in the process of step 202.

Thus, according to the present embodiment, for the T.38 communications, the line delay time for communications to and from the destination terminal is determined and the timer values of the timers used in the T.38 communications are updated by the determined value. Therefore, communications can be achieved in an appropriate manner.

It is to be noted that an effect of the line delay time for communications to and from the destination terminal occurs during a receiving operation of the T.38 communications. Therefore, line delay times for a plurality of destination terminals may be stored so that, during the receiving operation of the T.38 communications, timer values of the timers used in the T.38 communications can be updated (by a summing operation). Therefore, communications can be achieved in an appropriate manner.

In this case, the destination line delay information shown in Fig. 7A is created and stored for each of the destination terminals. The destination delay information contains host name, IP address and line delay time table of the relevant destination terminal. As shown in Fig. 7B, the line delay time table stores line delay time information created for each period of time. The line delay time information contains period-of-time information (e.g., duration of 1 hour), and a line delay time value determined during the relevant period of time. Also, the line delay time value can be created based on a plurality of determining operations using a predetermined statistical process.

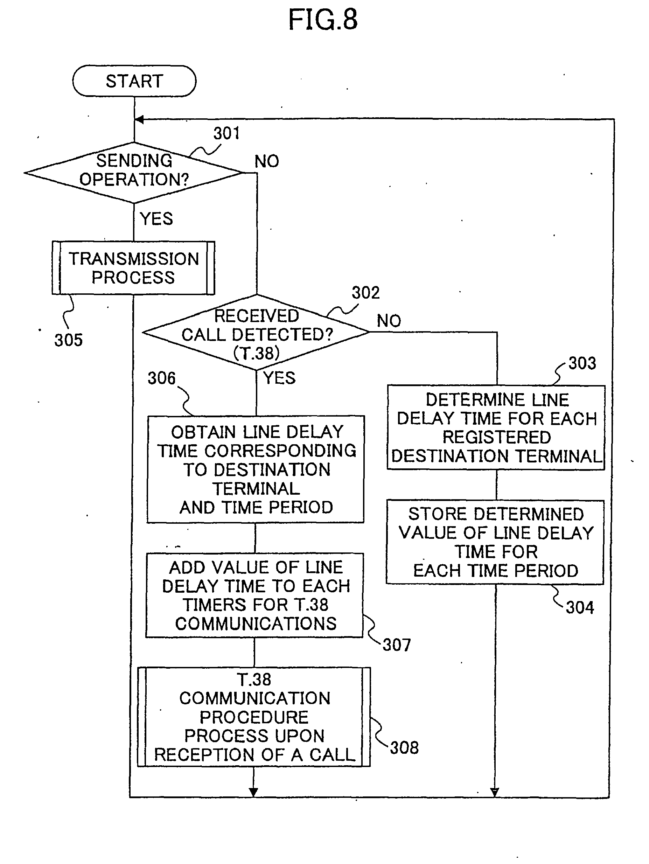

Fig. 8 is a flowchart showing an example of a process performed by the network facsimile apparatus FX of the present embodiment.

First, the network facsimile apparatus FX determines whether a sending operation is initiated by the user (step 301) and then monitors whether a received call is detected (step 302). If neither a transmission operation nor a call is detected, the above-described line delay time information is determined for each of the destination terminals.

That is to say, when the result of step 302 is NO, a Ping command is issued to an IP address of each of the registered destination terminals and a line delay time is determined (step 303). Then, based on the determined line delay time value, the content of the line delay time table is updated (step 304).

In a case where the user has carried out a sending operation and thus the result of step 301 is YES, a predetermined transmission process is performed (step 305).

In a case where a received call of the T.38 communication type is detected and the result of step 302 is YES, information of the calling terminal and line delay time value corresponding to the current time period are obtained from the registered destination line delay information (step 306).

Then, in step 307, timer values of timers for determining various time-out values applied in the T.38 communications are updated by adding the line delay time values obtained in step 306.

Then, using the.timer values that are updated in step 307, a signal receiving process of the T.38 communication procedure is executed (step 308).

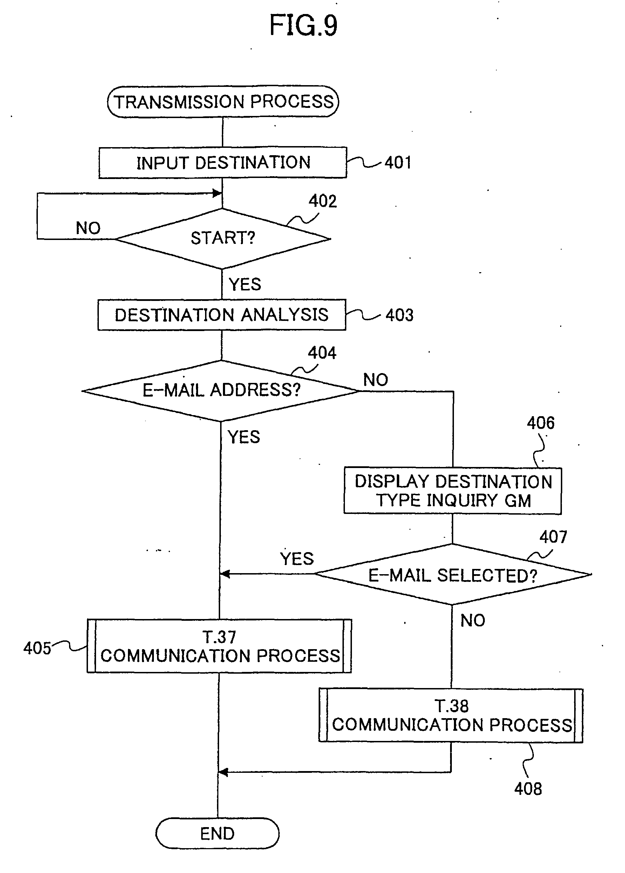

Fig. 9 is an example of the transmission process (step 305 of Fig. 8).

Firstly, the user inputs destination information by operating the operation display part 7 (step 401). Then, the process waits until the user operates the operation display part 7 and an initiation of transmission is directed (No loop from step 402).

When the user directs an initiation of transmission and the result of step 402 is YES, the content of the input destination information is analysed (step 403). Then, it is determined whether the destination address is an e-mail address containing "@" (step 404).

If the result of step 404 is YES, the T.37 communication function is selected and a predetermined T.37 communication process is performed in step 405.

If the result of step 404 is NO, the process proceeds to step 406 where a destination type inquiry guidance message is displayed to the user for inquiring whether the destination type requires the adoption of the T.37 communication function (e-mail) or the T.38 communication function (other than e-mail). Accordingly, the user is requested to determine whether to adopt the T.37 communication function or the T.38 communication function.

If the user selects e-mail and the result of step 407 is YES, the process proceeds to step 405 where the predetermined T.37 communication process is performed.

If the user selects the destination information other than e-mail and the result of step 407 is NO, the T.38 communication function is selected and the predetermined T.38 communication process is performed in step 408.

It is to be noted that the T.38 communication process (step 408) may be the same as the T.38 communication process shown in Fig. 6.

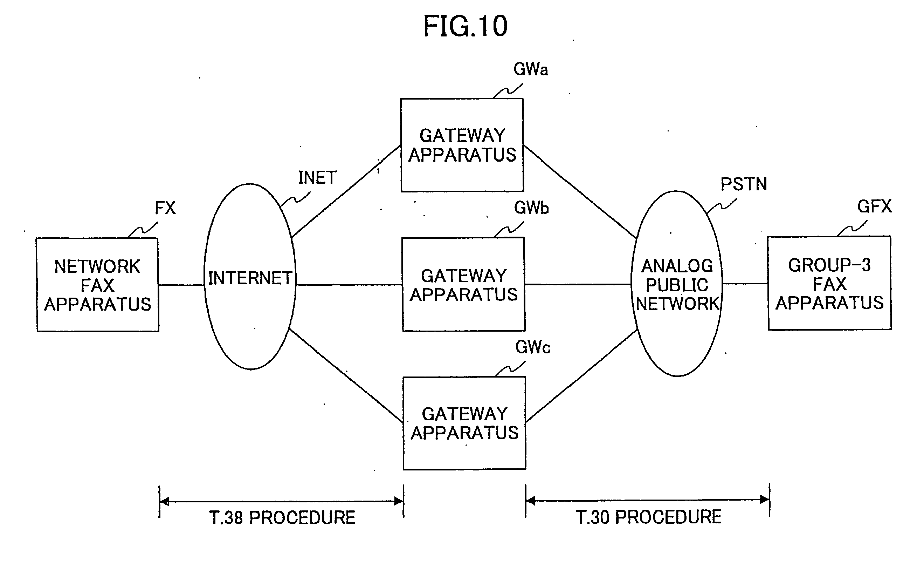

For a large scale communication system, there is a case where a plurality of gateway devices GW used in the communication configuration shown in Fig. 2B is provided as shown in Fig. 10. In such a case, three gateway devices GWa, GWb and GWc are provided for a destination terminal illustrated as a Group-3 facsimile apparatus GFX.

In a configuration provided with a plurality of gateway devices GW, in order to achieve smooth facsimile communications between the network facsimile FX and the Group-3 facsimile appartus GFx, it is advantageous to select the gateway device GW that uses the shortest line delay time.

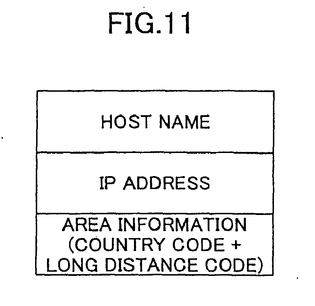

In such a case, gateway registration information for each gateway device GW is stored as shown in Fig. 11. The gateway registration information contains the host name and the IP address of the gateway device and area information indicating the area where the gateway device is installed. In the present embodiment, the area information is a combination of a country code and a long-distance code.

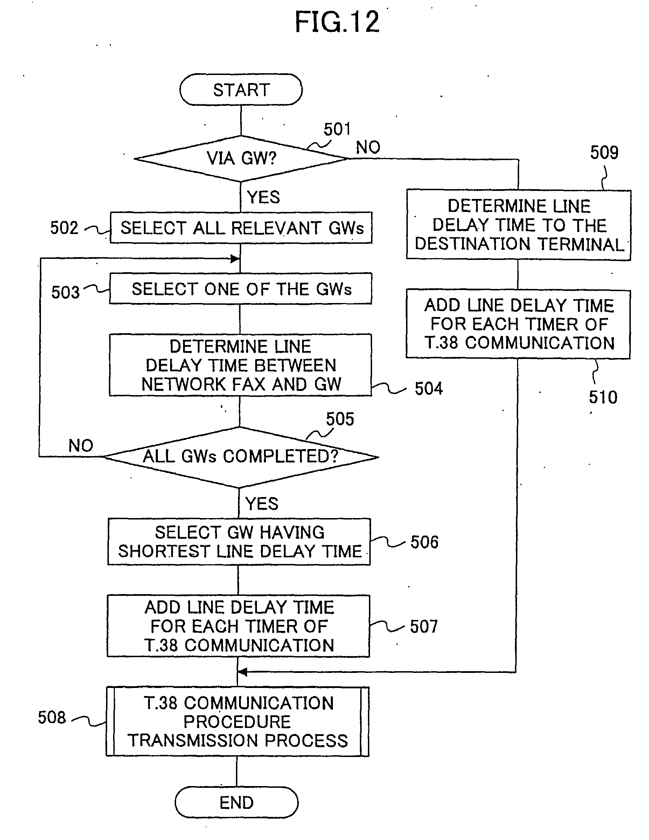

Fig. 12 is a flowchart showing an example of the T.38 communication process performed by the network facsimile apparatus FX.

First, it is determined whether communications to the destination are to be made via the gateway device (step 501). For example, if the telephone number of the destination includes a country code of a foreign country, it is determined that communications can be made via the gateway device.

If the result of step 501 is YES, all gateway devices available for the destination terminal are selected and gateway registration information of the selected gateway devices is obtained (step 502).

Then, gateway registration information for one of the gateway devices is selected from the gateway registration information obtained in step 502 (step 503). Then, the line delay time to the relevant gateway device is determined and the determined value is stored (step 504). Then, it is determined whether the process has been carried out for all the gateway devices selected in step 502 (step 505). If the result of step 505 is NO, the process returns to step 503 and the line delay time is determined and stored for other gateway devices.

If the process has been carried out for all the gateway devices selected in step 502 and the result of step 505 is YES, the gateway device having the smallest value for the line delay time is selected (step 506).

Then, the determined value of line delay time of the gateway device selected in the process of step 506 is added to timer values of timers for determining various time-out values applied in the T.38 communication to update the timer values (the process in step 507).

The, using the timer values that are updated in step 507, the gateway device selected in step 506 is designated and the transmission process of the T.38 communication procedure of the second communication configuration illustrated in Fig. 2B is executed (step 508).

The above-described embodiments are described for a case where line delay time is taken into consideration in the network facsimile apparatus. However, it is to be noted that the line delay time can also be taken into consideration for the gateway devices and that the present invention can be applied for the gateway devices.

Thus, according to the present invention, based on the destination information specified by the user, either the T.37 communication function or the T.38 communication function is selected automatically or manually selected by the user. Accordingly, the effort required from the user is reduced. For example, when the user wishes to send image information using an e-mail message and specifies an e-mail address as destination information, the T.37 communication function is always selected. Therefore, in this regard, the effort required from the user is reduced.

Further, the present invention is not limited to these embodiments, and variations and modifications may be made without departing from the scope of the present invention.

The present application is based on Japanese priority application No. 2001-182961 filed on June 18, 2001, the entire contents of which are hereby incorporated by reference.

## Claims

**1.** A network facsimile apparatus (FX) having a real-time network facsimile function (12) and an e-mail based facsimile function (11), **characterized in that** said apparatus comprises:
a selector (1) for making a selection, for a transmission operation, whether to use the real-time network facsimile function (12) or the e-mail-based facsimile function (11), said selection being made in accordance with specific destination information such that said selector (1) selects the e-mail-based facsimile function (11) when a symbol "@" is contained in said destination information.

**2.** The network facsimile apparatus (FX) as claimed in claim 1, wherein said selector (1) otherwise selects the real-time network facsimile function (12).

**3.** The network facsimile apparatus (FX) as claimed in claim 1, wherein said selector (1) otherwise queries the user about a destination type and selects either the real-time network facsimile function (12) or the e-mail based facsimile function (11) in accordance with the selection made by the user in response to said query.

**4.** A method of operating a network facsimile apparatus (FX) having a real-time network facsimile function (12) and an e-mail based facsimile function (11), said method comprising the step of:
making a selection, for a transmission operation, whether to use the real-time network facsimile function (12) or the e-mail based facsimile function (11), said selection being made in accordance with specified destination information such that the e-mail-based facsimile function (11) is selected when a symbol "@" is contained in said destination information

**5.** The method as claimed in claim 4, wherein otherwise the real-time network facsimile function (12) is selected.

**6.** The method as claimed in claim 4, wherein otherwise an inquiry is made to the user about a destination type and either the real-time network facsimile function (12)

**6.** The method as claimed in claim 4, wherein otherwise an inquiry is made to the user about a destination type and either the real-time network facsimile function (12) or the e-mail-based facsimile function (11) is selected in accordance with the selection made by the user in response to said inquiry.
